# EUROPÄISCHE PATENTSCHRIFT

(11) **EP 1 534 565 B1**
(45) Veröffentlichungstag und Bekanntmachung des Hinweises auf die Patenterteilung: **22.03.2006**
(21) Anmeldenummer: 03793650.7
(22) Anmeldetag: 28.07.2003
(51) Int. Cl.: B60S 1/08

(54) **VERFAHREN ZUM BETREIBEN EINER WISCHERANLAGE UND WISCHERANLAGE**
METHOD FOR OPERATING A WIPER SYSTEM, AND CORRESPONDING WIPER SYSTEM
PROCEDE D'UTILISATION D'UN SYSTEME D'ESSUIE-GLACE ET SYSTEME D'ESSUIE-GLACE

(30) Priorität: 12.08.2002 DE 10236887
(43) Veröffentlichungstag der Anmeldung: 01.06.2005
(73) Patentinhaber: VALEO SYSTEMES D'ESSUYAGE, 78321 La Verrière (FR)
(72) Erfinder: ASSAN, Jean, 70178 Stuttgart (DE)
(74) Vertreter: Jahn, Wolf-Diethart
(86) Internationale Anmeldenummer: PCT/EP2003/008294
(87) Internationale Veröffentlichungsnummer: WO 2004/022392

(56) Entgegenhaltungen:
- EP-A- 0 952 056
- US-A- 4 665 488

## Beschreibung

Die Erfindung betrifft ein Verfahren zum Betreiben einer Wischeranlage und eine Wischeranlage, insbesondere eine Gegenlauf- oder Schmetterlingswischanlage, mit wenigstens zwei unabhängig voneinander antreibbaren, mit Wischarmen zur Aufnahme von Wischblättern gekoppelten Motoreinheiten, mit einem Steuergerät zur Ansteuerung der Motoreinheiten, und mit dem Steuergerät verbundenen Sensoreinheiten zur Bestimmung der Winkelposition der Wischarme. Ein solches Verfahren bzw. eine solche Wischeranlage ist in der EP 0 952 056 beschrieben.

Derartige Verfahren und Wischeranlagen sind aus dem Stand der Technik bekannt. Als Motoreinheiten finden insbesondere reversible Motoren Verwendung, die von dem Steuergerät angesteuert werden. Der Vorteil von derartigen Wischeranlagen ist, dass auf ein aufwendiges und Bauraum beanspruchendes Wischergestänge zwischen den jeweiligen Drehachsen der Wischblätter verzichtet werden kann. Die Wischblätter können folglich bauraumsparend und unabhängig voneinander an beliebigen Stellen um die zu wischende Scheibe angeordnet werden. Ferner können die Wischblätter beliebig vorgebbare Wischwinkel abdecken; außerdem können sie bei Nichtgebrauch in eine geschützte Parkposition verfahren werden.

Als problematisch bei derartigen Wischvorrichtungen hat sich die Bestimmung der Winkelpositionen der Wischblätter herausgestellt, die zur Vermeidung einer Kollision der Wischblätter erforderlich ist. Bei bekannten Wischeranlagen überdecken sich die Wischbereiche der einzelnen Wischblätter in der Regel. Bei Gegenlauf- oder Schmetterlingswischanlagen kommt hinzu, dass beim Bewegungsablauf der oben liegende Wischhebel bzw. das oben liegende Wischblatt schneller beschleunigt werden muss, damit mit dem unten liegenden Wischblatt keine Berührung auftritt. Bei der Abwärtsbewegung muss sich entsprechend der unten liegende Wischhebel schneller bewegen. Hierfür ist eine entsprechende Ansteuerung der Motoreinheiten erforderlich.

Um die Winkelposition der Wischblätter bestimmen zu können, bieten sich verschiedene Möglichkeiten an: Es ist denkbar, an den Wischachsen ein analogen Drehwinkelsensor, beispielsweise einen Magnetfeldsensor mit einem sinus- oder kosinusförmigen Ausgangssignal, zu verwenden. Allerdings hat sich hierbei als nachteilig herausgestellt, dass das Signal des Gebermagneten temperaturabhängig ist. Bei hohen Motortemperaturen oder bei hohen Außentemperaturen führt dies zu einer ungenauen Bestimmung der Winkelposition der Wischhebel, was zu einer Kollision der Wischblätter führen kann. Um dem abzuhelfen, ist eine Temperaturkalibrierung erforderlich, die aufwendig relativ ungenau und mit Störungen behaftet ist.

Eine andere Möglichkeit zur Bestimmung der Winkelposition der Wischhebel bzw. der Wischblätter ist die Verwendung eines inkrementalen Sensors, insbesondere eines digitalen Magnetfeldsensors, der ein rechteckiges TTL-Signal aufweist. Die Verwendung eines derartigen Sensors ist allerdings deshalb nachteilig, weil ein Referenzpunkt zur Initiierung der Zählung vorzugeben ist. Wird beispielsweise bei abgestellter Wischeranlage oder bei von einer Stromversorgung, beispielsweise einer Fahrzeugbatterie, abgetrennter Wischeranlage der Wischhebel von Hand verstellt, so kann dies von einem inkrementalen Sensor nicht nachvollzogen werden. Beim Start der Anlage wird folglich von einer falschen Winkelposition der Wischhebel bzw. der Wischblätter ausgegangen.

Der vorliegenden Erfindung liegt deshalb die Aufgabe zugrunde, ein Verfahren zum Betreiben einer Wischeranlage bzw. eine Wischeranlage bereitzustellen, bei dem bzw. bei der die Winkelposition der Wischblätter zuverlässig auf einfache Art und Weise bestimmt werden kann.

Zur Lösung dieser Aufgabe wird ein Verfahren der eingangs beschriebenen Art vorgeschlagen, das sich dadurch kennzeichnet, dass die Wischwinkel der Wischblätter in Winkelzonen liegen, wobei zum einen mittels des absoluten Sensors die Winkelzone, innerhalb derer sich das jeweilige Wischblatt befindet, und zum anderen mittels eines relativen Sensors der Winkel, den das jeweilige Wischblatt innerhalb der jeweiligen Winkelzone aufweist, bestimmt wird.

Dies hat den Vorteil, dass durch Verwendung des absoluten Sensors immer zuverlässig bestimmt werden kann, innerhalb welcher Winkelzone sich das Wischblatt bzw. der Wischhebel befindet. Daneben wird der Winkel des Wischblatts innerhalb der jeweiligen Winkelzone bestimmt. Die tatsächliche Winkelposition des jeweiligen Wischblatts setzt sich folglich zum einen aus der jeweiligen Winkelzone und zum anderen aus dem jeweiligen Winkel innerhalb der Winkelzone zusammen. Selbst dann, wenn der Winkel innerhalb einer Winkelzone nicht richtig bestimmt wird, sei es beispielsweise durch eine kurze Unterbrechung der Stromversorgung, so kann dennoch aufgrund der Winkelzone, innerhalb derer sich das jeweilige Wischblatt befindet, rückgeschlossen werden, in welchem Bereich des Wischwinkels, also in welcher Winkelzone sich das jeweilige Wischblatt befindet.

Dabei ist vorteilhaft, wenn beim Überschreiten der Wischblätter von einer Winkelzone in eine benachbarte Winkelzone der Winkel innerhalb der zweiten Winkelzone rückgesetzt wird. Folglich wird beim Überschreiten der Grenzlinie zwischen zwei Winkelzonen der Winkel innerhalb der jeweiligen Winkelzone bei Null beginnend bestimmt. Die Grenzen zwischen jeweils zwei Winkelzonen bilden also die Referenzpunkte für die Bestimmung des Winkels innerhalb einer Winkelzone.

Ein besonders vorteilhaftes Verfahren ergibt sich dann, wenn es beim Starten der Wischeranlage und/oder des Fahrzeugs bestimmt, in welcher Winkelzone sich das jeweilige Wischblatt befindet. Der Winkel innerhalb der jeweiligen Zone ist hierbei nicht entscheidend. Ausgehend von der jeweiligen Winkelzone sind dann im Steuergerät Steuerabläufe abgelegt, die die Motoreinheiten derart ansteuern, dass die Wischblätter ohne eine gegenseitige Kollision in eine jeweils benachbarte Winkelzone bewegt werden. Beim Überschreiten der Grenzlinie zwischen zwei Winkelzonen wird dann für die Winkelzone, in die das Wischblatt eintritt, der Winkel innerhalb dieser Winkelzone bestimmt. Folglich ist ab dem Moment, in dem ein Wischblatt in eine neue Winkelzone gelangt, die tatsächliche Winkelposition des jeweiligen Wischblatts bekannt. Ein solches Verfahren hat den Vorteil, dass bei abgestelltem Fahrzeug oder bei Unterbrechung der Stromversorgung selbst dann, wenn die Wischblätter bzw. Wischhebel manuell verstellt werden, aus der Winkelzone, innerhalb derer sich das jeweilige Wischblatt befindet, eine kollisionsfreie Bewegung der Wischblätter in eine benachbarte Winkelzone möglich ist. Die tatsächliche Winkelposition der Wischblätter kann folglich kurz nach Starten der Wischeranlage bzw. des Fahrzeuges bestimmt werden, nämlich bei Überschreiten der Wischblätter von einer Winkelzone in eine andere Winkelzone.

Ein weiteres, vorteilhaftes Verfahren zeichnet sich dadurch aus, dass die Steuerabläufe die Wischblätter derart bewegen, dass sie in eine Parkposition geführt werden. Dabei ist vorteilhaft, wenn beim Starten des Fahrzeuges abgeprüft wird, in welcher Winkelzone sich die jeweiligen Wischblätter befinden. Sollten diese sich nicht in der vorgegebenen Winkelzone, beispielsweise in der Parkposition, befinden, so werden die Wischblätter über die abgelegten Steuerabläufe in ihre Parkposition geführt.

Die genannte Aufgabe wird außerdem durch eine Wischeranlage gelöst, die sich dadurch kennzeichnet, dass sie zur Durchführung des erfindungsgemäßen Verfahrens geeignet ist.

Eine vorteilhafte Wischeranlage zeichnet sich dadurch aus, dass für jedes Wischblatt eine Sensoreinheit vorgesehen ist, die einen absoluten Sensor zur Bestimmung der jeweiligen Winkelzone und einen relativen Sensor zur Bestimmung des Winkels innerhalb einer Winkelzone aufweist, wobei die Grenzen zwischen jeweils zwei benachbarten Winkelzonen Referenzpunkte für den relativen Sensor bilden. Die tatsächliche Winkelposition setzt sich folglich aus der jeweiligen Winkelzone und dem Winkel innerhalb einer Winkelzone zusammen. Bei Überschreiten der Grenzen zwischen jeweils zwei benachbarten Winkelzonen wird der inkrementale Sensor auf Null gesetzt und die Zählung beginnt von Neuem. Hierdurch wird eine sehr sichere Bestimmung der tatsächlichen Winkelposition erreicht. Aufgrund dieser positionsgenauen Bestimmung der Wischblätter kann eine Kollision der Wischblätter durch eine entsprechende Aussteuerung weitgehend ausgeschlossen werden.

Vorteilhaft ist, wenn der absolute Sensor die Winkelzonen an der Schwenkachse des jeweiligen Wischarms erfasst. Dadurch, dass der Wischwinkel eines Wischblatts in der Regel maximal 160° bis 180° aufweist, kann der absolute Sensor einem Winkelbereich der Schwenkachse eine eindeutige Winkelzone zuordnen.

Dabei ist vorteilhaft, wenn der Sensor ein digitaler Magnetfeldsensor ist, der ein an der Schenkachse angeordnetes Polrad umfasst, das von zwei versetzt zueinander angeordneten Sensorelementen abgetastet wird. Vorteilhafterweise ergeben sich bei dieser Anordnung vier verschiedene digitale Ausgangssignale, die folgendermaßen aussehen können:
Winkelzone Z₁: Sensorelement H₁: Süd und Sensorelement H₂: Süd;
Winkelzone Z₂: Sensorelement H₁: Nord und Sensorelement H₂: Süd;
Winkelzone Z₃: Sensorelement H₁: Nord und Sensorelement H₂: Nord;
Winkelzone Z₄: Sensorelement H₁: Süd und Sensorelement H₂: Nord.

Vorteilhafterweise ist bei einem derartigen Sensor die Anzahl Anordnung und die Größe der Winkelabstände der Polungen des Polrades und die Anzahl und der Winkelabstand der Magnetfeldsensoren auf den Wischwinkel des jeweiligen Wischblattes abgestimmt. Es hat sich herausgestellt, dass pro Wischwinkel eine Einteilung der Wischwinkel in vier Zonen Z₁, Z₂, Z₃ und Z₄ ausreichend ist. Bei Vorsehen von drei Magnetfeldsensoren bei zwei Polungen können maximal acht Winkelzonen detektiert werden.

Erfindungsgemäß kann vorgesehen sein, dass der relative Sensor die Drehzahl der Motorwelle vor einer Getriebeübersetzung erfasst. Dies hat den Vorteil, dass die Drehzahl der Abtriebswelle des Motors gegenüber der Drehzahl der Abtriebswelle des Getriebes um ein Vielfaches höher ist.

Vorteilhaft ist, wenn der relative Sensor ein digitaler, inkrementaler Magnetfeldsensor ist. Je nach gewünschter Genauigkeit des Winkels innerhalb einer Winkelzone können entsprechend viele Signale vom Magnetfeldsensor pro Winkelzone detektiert werden.
Eine vorteilhafte Wischeranlage ergibt sich dann, wenn die Wischwinkel der Wischblätter in jeweils mindestens drei und vorzugsweise vier Winkelzonen liegen. Die einzelnen Winkelzonen können hierbei verschiedene Winkelbereiche abdecken. Nicht erforderlich ist, dass die Winkelzonen gleich groß sind. Vorteilhaft ist, wenn die maximalen Wischwinkel innerhalb einer Zone liegen, d.h. wenn die Umkehrpositionen der Wischblätter in einer Zone - und nicht auf einer Zonengrenze - liegen. Damit wird eine eindeutige Zuordnung möglich.

Dabei hat sich als vorteilhaft herausgestellt, wenn der jeweilige Winkelbereich, in dem eine Kollision möglich ist (Kollisionsbereich), in vorzugsweise drei Winkelzonen unterteilt ist.

Bei einer bevorzugten Ausführungsform der Erfindung ist vorgesehen, dass im Steuergerät die Wischwinkelzonen der verschiedenen Wischblätter in einer Matrix abgebildet sind, wobei jeweils eine Winkelzone eines Wischblatts und eine Winkelzone eines anderen Wischblatts ein Feld der Matrix bilden. Dazu wird beispielsweise auf einer X-Achse der Wischwinkel mit den jeweiligen Winkelzonen des einen Wischblatts und auf einer Y-Achse der Wischwinkel mit den jeweiligen Winkelzonen des anderen Wischblatts aufgetragen. Bei Unterteilung der Wischwinkel der beiden Wischblätter in jeweils vier Zonen weist die Matrix insgesamt 16 Winkelfelder auf.

Vorteilhafterweise ist der Kollisionsbereich der Wischblätter der Matrix überlagert. Hieraus lässt sich auf einfache Art und Weise ableiten, in welchen Feldern unter welchen Winkelpositionen es zu einer Kollision der Wischblätter kommen kann.

Ferner werden vorteilhafterweise die Felder der Matrix so gewählt, dass die Grenzlinien des Kollisionsbereichs ein Feld nur einmal durchlaufen. Dies hat den Vorteil, dass die Felder, die von den Grenzlinien durchlaufen werden, eindeutig in zwei Unterbereiche aufgeteilt werden können, nämlich in einen Bereich, in dem eine Kollision stattfindet, und einen Bereich, in dem keine Kollision stattfindet. Damit lässt sich für jedes Feld eindeutig ein Bewegungsablauf anlegen, der die Motoreinheiten so ansteuert, dass die Wischblätter ohne eine Kollision bewegt werden.

Es hat sich gezeigt, dass eine besonders vorteilhafte Matrix dann vorliegt, wenn der Kollisionsbereich von insgesamt neun Feldern abgedeckt wird.

Ausgehend von jedem möglichen Feld in der Matrix sind, ohne dass die Winkel innerhalb der jeweiligen Winkelzonen bekannt sind, Steuerabläufe abgelegt, die, ausgehend von einem beliebigen Punkt innerhalb eines Feldes, die Wischblätter in ein benachbartes Feld bewegen, ohne den Kollisionsbereich zu durchlaufen. Dies hat den Vorteil, dass beispielsweise beim Starten der Wischeranlage bzw. des Fahrzeuges, ohne bekannten Winkel innerhalb einer Wischzone, die Wischblätter so in ein benachbartes Feld geführt werden, ohne dass eine Kollision stattfinden kann. Bei Überschreiten der Grenzlinie zu dem benachbarten Feld beginnt dann der inkrementale Sensor den Winkel innerhalb der Zone zu bestimmen, woraus auf die tatsächliche Winkelposition der Wischarme rückgeschlossen werden kann.

Weitere vorteilhafte Ausgestaltungen und Einzelheiten der Erfindung sind der nachfolgenden Beschreibung zu entnehmen, in der die Erfindung anhand der Zeichnung näher beschrieben und erläutert ist.

In der Zeichnung zeigen:
- Fig. 1:: eine schematische Darstellung einer erfindungsgemäßen Wischeranlage;
- Fig. 2:: eine schematische Darstellung eines Sensors zur Bestimmung der Winkelzone eines Wischblatts einer erfindungsgemäßen Wischeranlage mit zugehöriger Tabelle zur Signalauswertung;
- Fig. 3:: eine Matrix mit verschiedenen Winkelzonen der Wischwinkel und zugehörigen Winkelfeldern; und
- Fig. 4:: einen vergrößerten Ausschnitt der Matrix gemäß Fig. 3 mit Steuerabläufen.

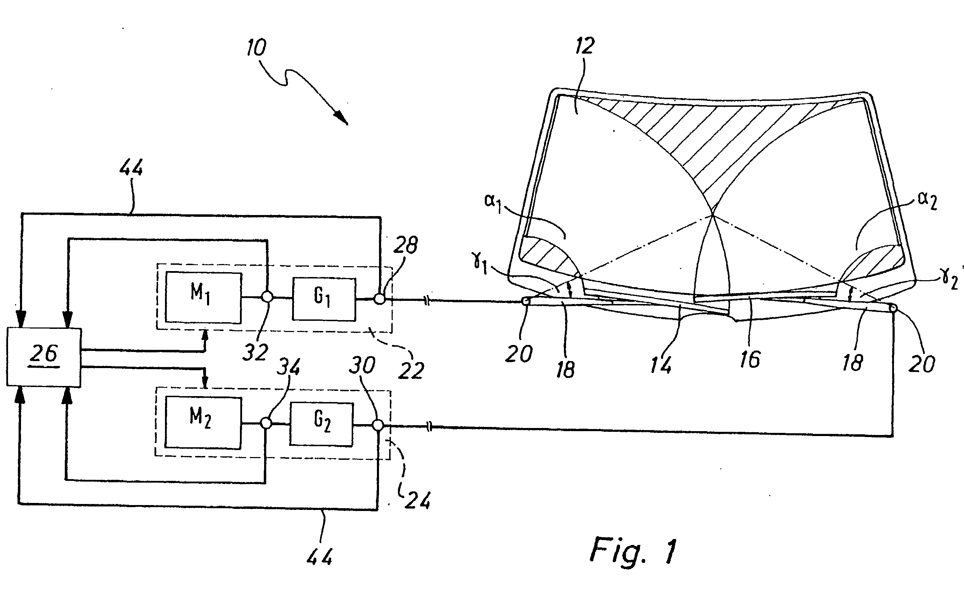

In der Fig. 1 ist eine erfindungsgemäße Wischeranlage 10 dargestellt. Die Wischeranlage ist als Schmetterlingswischanlage ausgelegt und weist zwei auf einer Scheibe 12 angeordnete Wischblätter 14 und 16 auf. Die Wischblätter 14 und 16 sind über jeweils einen Wischarm 18 um jeweils eine Schwenkachse 20 um den jeweiligen Wischwinkel α₁ und α₂ verschwenkbar. Im Winkelbereich γ₁ des Wischblatts 14 besteht eine Kollisionsgefahr mit dem Wischblatt 16. Entsprechend besteht im Winkelbereich γ₂ des Wischblatts 16 eine Kollisionsgefahr mit dem Wischblatt 14.

Die Wischeranlage 10 umfasst außerdem zwei Motoreinheiten 22 und 24, wobei die Motoreinheit 22 zum Antrieb des Wischblatts 14 und die Motoreinheit 24 zum Antrieb des Wischblatts 16 vorgesehen ist. Die beiden Motoreinheiten 22 und 24 umfassen jeweils einen reversiblen Elektromotor M₁, M₂ und ein dem Elektromotor M₁, M₂ nachgeschaltetes Getriebe G₁, G₂. Die Motoreinheiten 22 und 24 werden von einem Steuergerät 26 in Abhängigkeit der jeweiligen Winkelposition der Wischblätter 14, 16 angesteuert. Zur Bestimmung der Winkelposition der Wischblätter 14, 16 sind Sensoreinheiten vorgesehen, die jeweils einen absoluten Sensor 28, 30 und einen relativen Sensor 32, 34 aufweisen.

Die Wischwinkel α₁ und α₂ der beiden Wischblätter 14, 16 liegen jeweils in vier Winkelzonen Z₁, Z₂, Z₃ und Z₄. Die Zonen sind so gewählt, dass die Kollisionswinkel γ₁ und γ₂ jeweils in drei Winkelzonen Z₁, Z₂ und Z₃ und dass die maximalen Wischwinkel, bzw. die Umkehrpositionen der Wischblätter 14, 16, innerhalb der Zone 4 liegen.

Die absoluten Sensoren 28, 30, die im Bereich der Schwenkachse der Wischarme 18 angeordnet sind, dienen zur Bestimmung, innerhalb welcher Winkelzone Z₁, Z₂, Z₃ oder Z₄ der jeweilige Wischarm 18 bzw. das jeweilige Wischblatt 14, 16 vorhanden ist. Zur Bestimmung des Winkels δ innerhalb der jeweiligen Winkelzone sind die relativen Sensoren 32, 34 vorgesehen. Die jeweiligen tatsächlichen Winkelpositionen ϕ bestimmen sich dann wie folgt: ϕ = Z + δ. Die relativen Sensoren 32, 34 sind vorteilhafterweise als inkrementale Sensoren ausgebildet, die vorteilhafterweise an der Motorabtriebswelle bzw. an der Getriebeeingangswelle angeordnet sind. Beim Überschreiten einer Zonengrenze der Zone Z₁ bis Z₄ werden die relativen Sensoren auf Null rückgesetzt. Die Signale der jeweiligen Sensoreinheit bzw. der Sensoren 28, 30, 32, 34 sind Eingangssignale des Steuergeräts 26.

Die absoluten Sensoren 24, 28 sind vorteilhafterweise digitale Magnetfeldsensoren. Die relativen Sensoren 32, 34 sind vorteilhafterweise inkrementale, digitale Magnetfeldsensoren. Anstelle von Magnetfeldsensoren können auch jede andere Art von Sensoren Verwendung finden, die zu einem entsprechenden digitalen Messergebnis führen.

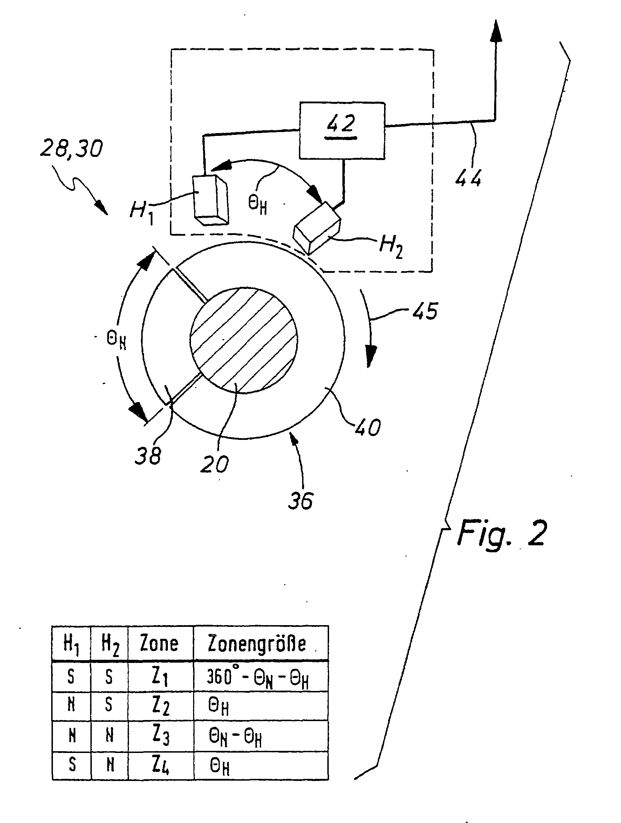

Ein denkbarer absoluter Sensor 28, 30 ist schematisch in Fig. 2 dargestellt. Gezeigt ist eine Schwenkachse 20 im Schnitt, die von einem magnetisierten Polrad 36 umgeben ist. Das Polrad weist ein Nordpolsegment 38, das sich über einen Winkel θ_{N} von ca. 70°erstreckt und Südpolsegment 40, das sich über einen Winkel θ_{S} von ca. 290° erstreckt, auf. Das Polrad 36 wird von zwei in einem Winkel θ_{H} von ca. 20° versetzt zueinander angeordneten Sensorelementen H₁ und H₂ abgetastet. Die von den Sensorelementen H₁ und H₂ erfassten Signale werden einer Auswerteeinheit 42 zugeführt, die mit dem Steuergerät 26 über eine Leitung 44 gekoppelt ist. Die Auswerteeinheit 42 wertet die von den Sensorelementen H₁ und H₂ erfassten digitalen Signale (Nordpol: +; Südpol: -) aus. Aus den entsprechend erfassten Signalen wird auf die jeweilige Winkelzone der Schwenkachse 20 bzw. auf die jeweilige Winkelzone des zugehörigen Wischblatts 14, 16 rückgeschlossen.

Aus der Auswertetabelle gemäß Fig. 2 lässt sich ablesen, dass das Wischblatt 14 bzw. 16 dann in der Winkelzone Z₁ ist, wenn die Sensorelemente H₁ und H₂ beide einen Südpol detektieren. Wird die Achse 20 im Uhrzeigersinn (Pfeil 45) gedreht, detektiert das Sensorelement H₁ einen Nordpol und H₂ einen Südpol. Das entsprechende Wischblatt 14, 16 befindet sich in der Winkelzone Z₂. Bei weiterem Verdrehen gelangt das Wischblatt in die Zone Z₃ und die beiden Sensorelemente H₁ und H₂ detektieren einen Nordpol. In der Winkelzone Z₄ detektiert H₁ einen Südpol und H₂ einen Nordpol.

Je nach Wischwinkel α₁, α₂ sind die Anordnung die Anzahl und die Größe θ_{S}, θ_{N} der Winkelabschnitte 38, 40 der Polung des Polrades 36 und je nach Abstand θ_{H} der Hallsensoren zueinander verschieden.

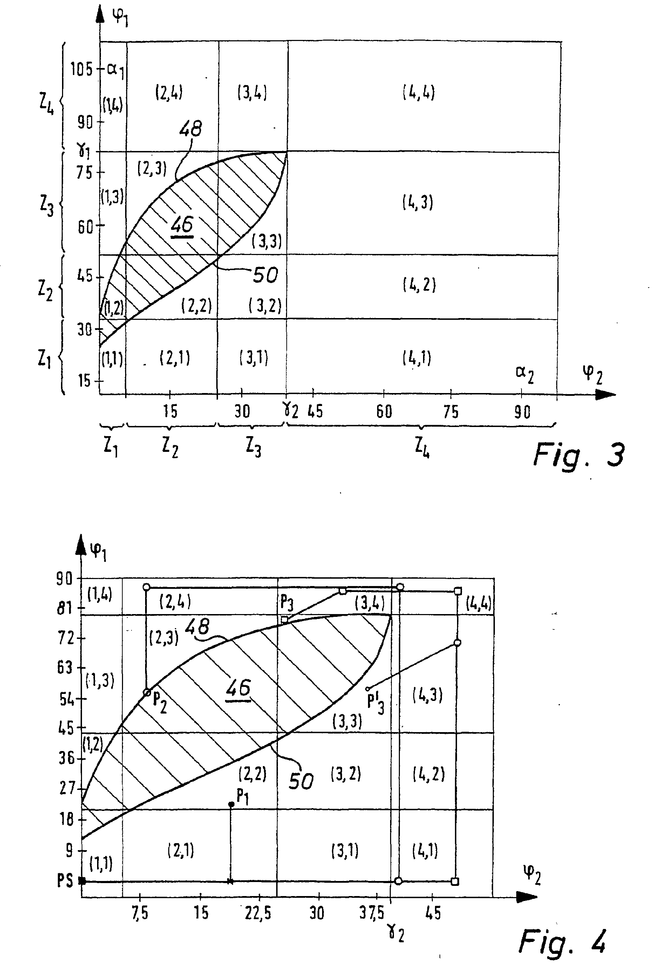

Fig. 3 zeigt eine Matrix, bei der auf der X-Achse die Winkelposition ϕ₁ des Wischblatts 14 und auf y-Achse die Winkelposition ϕ₂ aufgetragen ist. Wie Fig. 3 entnommen werden kann, beträgt der Wischwinkel α₁ ca. 105° und der Wischwinkel α₂ ca. 90°, wobei die Wischwinkel α₁ und α₂, bzw. die Umkehrpositionen der Wischblätter 14, 16, innerhalb der Zonen Z₄ liegen. Das Ende der Zonen 4 liegt außerhalb der Wischwinkel bzw. außerhalb der Scheibe, damit eine klare Unterscheidung zwischen dem Endbereich der Zone 4 und dem Anfangsbereich der Zone 3 möglich ist. Die Zone 4 des einen Wischblatts 14 endet bei ϕ₁ :ca. 110° und die Zone 4 des anderen Wischblatts 16 bei ϕ₂ :ca. 95°.

Sollte es nicht möglich sein, dass der Endbereich der Zone 4 außerhalb des Wischwinkels α₁, α₂ liegt, dann kann ein weiterer Hallsensor H₃ Verwendung finden, um eine weitere Zone, eine Nicht-Kollisionszone, zu schaffen. Insgesamt kann dann die Scheibe so unterteilt werden, dass jeder Wischwinkel α₁, α₂ insgesamt in bis zu 8 Zonen liegen kann, was dann zu einer Matrix von 64 Feldern führt.

Die Winkel γ₁ und γ₂, in denen eine Kollision der Wischblätter und 16 möglich ist, weisen folgende Werte auf: γ₂: ca. 40°, γ₁: ca. 80°. Die Wischwinkel α₁ und α₂ liegen jeweils in den vier Winkelzonen Z₁ - Z₄. Die Unterteilung ist hierbei derart, dass die Winkelzonen Z₁ - Z₃ die Winkel γ₁ bzw. γ₂ in drei Teile teilen. Die Zone Z₄ beinhaltet jeweils die Winkelbereiche, in denen keine Kollision der Wischblätter 14, 16 stattfinden kann. Jeweils eine dem einen Wischarm zugeordnete Zone und eine dem anderen Wischarm zugeordnete Zone bilden ein Feld der Matrix. Insgesamt sind 16 Felder (x,y) vorgesehen, mit x = 1, 2, 3, 4 und y = 1, 2, 3, 4, wobei x und y die Indizes der jeweiligen Winkelzone Z₁ - Z₄ des jeweiligen Wischarms bzw. Wischblatts 14, 16 sind.

In der Fig. 3 ist ferner schraffiert dargestellt der Kollisionsbereich 46 der beiden Wischblätter 14, 16.

Winkelpaarungen der Winkelpositionen ϕ₁ und ϕ₂, die in diesem Bereich liegen, führen zu einer Kollision der Wischblätter 14, 16. Folglich ist dieser Bereich 46 zu meiden. Der Bereich 46 wird umgeben von einer oberen Grenzlinie 48 und einer unteren Grenzlinie 50. Die Felder (x,y) mit x = 1, 2, 3 und y =1, 2, 3 sind derart angeordnet, dass der Kollisionsbereich 46 in diesen neun Feldern liegt. Die restlichen sieben Felder, die von den Zonen Z₄ der Wischblätter 14, 16 abgedeckt werden, überschneiden sich nicht mit dem Kollisionsbereich 46.

Über die beiden absoluten Sensoren 28, 30 kann bestimmt werden, in welchem Feld sich das jeweilige Wischblatt 14, 16 befindet. Insbesondere unmittelbar beim Starten der Wischeranlage 10 bzw. des Fahrzeuges kann aufgrund der Verwendung der absoluten Sensoren 28, 30 sofort erkannt werden, in welchem Feld die Wischblätter 14, 16 liegen. Ausgehend von den jeweiligen Feldern sind in dem Steuergerät 26 Steuerabläufe abgelegt, die ein Bewegen der Wischblätter 14, 16 zur Folge haben, ohne dass eine Kollision der Wischblätter 14, 16 auftreten kann. Fig. 4 gibt hierfür verschiedene Beispiele.

In der Fig. 4 sind die neun Felder, in denen der Kollisionsbereich 46 liegt, vergrößert dargestellt. Ferner sind beispielhaft Positionen P₁, P₂, P₃ und P'₃ von Winkelpositionen angegeben, in denen sich die Wischblätter 14, 16 beispielsweise beim Starten der Wischeranlage 10 befinden.

Wird beispielsweise beim Starten der Wischvorrichtung 10 festgestellt, dass sich die Wischblätter 14, 16 im Feld (2,2), in dem der Punkt P₁ liegt, befinden, so kann ein in dem Steuergerät 26 abgelegter Steuerablauf wie folgt aussehen:
Der Winkel ϕ₂ im Punkt P₁ bleibt konstant, während der Winkel ϕ₁ des Wischblatts 14 gesenkt wird. P₁ wandert dann gemäß der in der in Fig. 4 dargestellten Linie senkrecht nach unten. Sobald die Grenzlinie zu Feld (2,1) überschritten wird, beginnt der relative Sensor 32 zu zählen, wodurch die tatsächliche Winkelposition ϕ₁ = Z₁.- δ bestimmbar ist. Hat ϕ₁ einen vorgegebenen Wert erreicht, so wird der Winkel ϕ₁ konstant gehalten und ϕ₂ wird reduziert. Damit bewegt sich der Punkt P₁ in der Matrix nach links. Sobald die Grenzlinie zwischen dem Feld (2,1) und (1,1) überschritten wird, beginnt der relative Sensor 34 zu zählen, wodurch bei Überschreiten der Grenzlinie die tatsächliche Winkelposition ϕ₂ bekannt ist. Dadurch, dass im Steuergerät 26 der Kollisionsbereich 46 abgelegt ist, ist dem Steuergerät 26 bekannt, dass ausgehend vom Feld (2,2) die beschriebene Vorgehensweise immer zu einem kollisionsfreien Bewegen der Wischblätter 14, 16 führen wird.

Wird über den absoluten Sensor 28 festgestellt, dass beim Starten der Wischvorrichtung das Wischblatt 14 in der Zone Z₃ liegt, und wird über den absoluten Sensor 24 beim Starten der Wischvorrichtung 10 festgestellt, dass das Wischblatt 16 in der Zone Z₂ liegt, dann ergibt sich ein Punkt P₂ im Feld (2,3) als Ausgangspunkt. Um ausgehend vom Feld (2,3) zu der Parkstellung der Wischblätter 14, 16 zu gelangen, ohne dass eine Kollision der Wischblätter 14, 16 stattfinden kann, wird der in der Fig. 4 vom Punkt 2 ausgehende Bewegungsablauf durchlaufen. Zunächst wird der Winkel ϕ₂ des Wischblatts 16 konstant gehalten und der Winkel ϕ₁ des Wischblatts 14 auf nahezu 90° vergrößert. Im Bereich des Feldes (2,3) ist die tatsächliche Winkelposition des Winkels ϕ₁ noch nicht bekannt. Erst bei Überschreiten der Grenzlinie vom Feld (2,3) zum Feld (2,4) wird der relative Sensor 32 auf seinen Referenzwert rückgesetzt, und die tatsächliche Winkelposition
ϕ₁ = Z₁.+ Z₂.+ Z₃.+ δ kann genau bestimmt werden. Ist der Wert ϕ₁ von nahezu 90° erreicht, so wird ϕ₁ konstant gehalten und der Motor M₂ wird so angesteuert, dass die Winkelposition ϕ₂ auf einen Wert größer γ₂, beispielsweise auf ca. 40°, vergrößert wird. Nach Erreichen dieses Wertes wird ϕ₂ konstant gehalten, und ϕ₁ wird gesenkt bis auf einen Wert von ca. 2° - 3°. Das Wischblatt 14 hat dann seine Parkposition erreicht. Schließlich wird ϕ₂ gesenkt, d.h. auch das Wischblatt 14 wird in die Parkposition rückgefahren. Aus Fig. 4 wird ferner deutlich, dass durch einen derartigen Bewegungsablauf, ausgehend von der Zone (2,3), die Wischblätter so angesteuert werden, dass der Kollisionsbereich 46 umfahren wird; eine Kollision der Wischblätter 14, 16 tritt folglich nicht ein. Die tatsächliche Winkelposition ϕ₂ ist bei diesem Bewegungsablauf erst dann genau bekannt, wenn die Grenzlinie zwischen Feld (2,4) und (3,4) überschritten wird. Hier wird der relative Sensor 34 auf Null zurückgesetzt und die inkrementale Zählung beginnt. Aus Fig. 4 wird deutlich, dass ausgehend vom Feld (2,3) durch einen abgespeicherten Bewegungsablauf, der den Winkel ϕ₂ konstant hält und den Winkel ϕ₁ vergrößert, ein kollisionsfreies Bewegen der Wischblätter 14, 16 erreicht werden kann.

Wird beim Initiieren der Auswerteeinheit 42 über die absoluten Sensoren 28, 30 festgestellt, dass sich die Wischblätter 14, 16 im Feld (3,3) befinden, ist zunächst nicht bekannt, ob sich die Wischblätter 14, 16 in einem Punkt P₃ oberhalb der oberen Grenzlinie 48 (P₃) oder unterhalb der unteren Grenzlinie 50 (P'₃) befindet. Das Feld (3,3) hat nämlich den Nachteil, dass es von beiden Grenzlinien, nämlich der oberen 48 und der unteren 50, durchlaufen wird. Um dennoch ein kollisionsfreies Bewegen der Wischblätter 14, 16 zu ermöglichen, ist ein Bewegungsablauf vorgesehen, der die Winkel ϕ₁ und ϕ₂ der Wischblätter 14 und 16 zeitgleich vergrößert. Ausgehend vom Punkt P₃ oder vom Punkt P'₃ wandern dann die Punkte P₃ und P'₃ entlang den in der Fig. 4 dargestellten Linien nach schräg oben. Die beiden von den Punkten P₃ und P'₃ ausgehenden Linien verlaufen hierbei parallel zueinander. Die Steigung der Linien ist so gewählt, dass unabhängig davon, in welchem Punkt innerhalb des Feldes (3,3) die Wischblätter 14, 16 liegen, es zu keiner Kollision der Wischblätter kommt bzw. die von einem beliebigen Startpunkt P₃ bzw. P'₃ im Feld (3,3) ausgehende Linie den Kollisionsbereich 46 nicht schneidet. Sobald eine das Feld (3,3) begrenzende Grenzlinie überschritten wird, wird der entsprechende relative Sensor auf Null rückgesetzt.

Ausgehend vom Punkt P₃ wird schon nach wenigen Grad die Grenzlinie zum Feld (3,4) überschritten. Folglich wird erkannt, dass sich der Punkt P₃ im oberen Bereich des Feldes (3,3) befindet. Dann wird der Winkel ϕ₁ konstant gehalten und der Winkel ϕ₂ vergrößert, bis das Feld (4,4) erreicht wird. Um in die Parkstellung der Wischblätter 14, 16 zu gelangen, wird zunächst der Winkel ϕ₁ abgesenkt auf ca. 3°, dann wird der Winkel ϕ₂ abgesenkt auf ca. 0°.
Ausgehend vom Punkt P'₃ wird beim Überschreiten der Grenzlinie zum Feld (4,3) erkannt, dass sich der Punkt P'₃ im unteren Bereich des Feldes (3,3) befindet. Im Feld (4,4) wird dann der Winkel ϕ₁ abgesenkt, bis das Feld (4,1) erreicht ist. Dann wird der Winkel ϕ₂ abgesenkt, bis die Parkstellung PS der Wischblätter 14, 16 erreicht ist.

Die beschriebene Wischeranlage 10 und das beschriebene Verfahren zum Betreiben der Wischeranlage 10 haben insbesondere den Vorteil, dass beim Starten der Wischeranlage 10 bzw. des Fahrzeuges die Wischblätter 14, 16 stets ohne eine Kollision in ihre Ausgangslage bzw. in die Parkstellung PS rückgeführt werden können. Mit Initiierung der Wischeranlage 10 ist bekannt, in welchem Feld sich die Wischblätter 14, 16 befinden. Je nach Feld wird dann ein in dem Steuergerät 26 abgelegter Steuerablauf herangezogen, um die Wischblätter 14, 16 in ihre entsprechende Position zu bewegen. So wird ausgehend vom Feld (1,2), (1,3), (2,3) zunächst der Winkel ϕ₁ so weit vergrößert, bis die Zone Z₄ des Winkels ϕ₁ erreicht ist. Dann wird ϕ₁ konstant gehalten und der Winkel ϕ₂ so weit vergrößert, bis die Zone (4,4) erreicht ist. Anschließend wird der Winkel ϕ₁ so lange verkleinert, bis das Wischblatt 14 die Parkposition erreicht hat. Danach wird das Wischblatt 16 durch Verkleinerung des Winkels ϕ₂ ebenfalls in die Parkposition rückgeführt. Der Kollisionsbereich 46 wird folglich sicher umlaufen. Befinden sich die Wischblätter 14, 16 in der Zone (1,1), (2,1), (2,2), (3,2), so wird zunächst der Winkel ϕ₁ verkleinert, und zwar so weit, bis das Wischblatt 14 in seiner Parkposition ist. Danach wird das Wischblatt 16 durch Verkleinerung des Winkels ϕ₂ ebenfalls in die Parkposition verfahren. Eine Besonderheit stellt das Feld (3,3) dar, da es einen oberen und einen unteren denkbaren Abschnitt für die Wischblätter 14, 16 aufweist. Deshalb sind hier die beiden Wischblätter 14, 16 zeitgleich so zu verfahren, dass zum einen der Winkel ϕ₁ und zum anderen der Winkel ϕ₂ vergrößert wird.

Alle in dem Steuergerät 26 abgelegten Bewegungsabläufe haben gemein, dass der Kollisionsbereich 46 über die Felder, in denen der Kollisionsbereich 46 nicht liegt, nämlich den Feldern (1,4), (2,4), (3,4) (4,4), (4,3), (4,2), (4,1), (3,1), (2,1), (1,1), umfahren wird.

## Patentansprüche

1. Verfahren zum Betreiben einer Wischeranlage (10), insbesondere einer Gegenlauf- oder Schmetterlingswischanlage, mit wenigstens zwei unabhängig voneinander antreibbaren, mit Wischarmen (18) zur Aufnahme von Wischblättern (14, 16) gekoppelten Motoreinheiten (22, 24), mit einem Steuergerät (26) zur Ansteuerung der Motoreinheiten (22, 24), und mit dem Steuergerät (26) verbundenen Sensoreinheiten (28, 32 und 30, 34) zur Bestimmung der Winkelposition (ϕ₁, ϕ₂) der Wischblätter (14, 16), **dadurch gekennzeichnet, dass** die Wischwinkel (α₁, α₂) der Wischblätter (14, 16) innerhalb verschiedener Winkelzonen (Z₁, Z₂, Z₃, Z₄) liegen, wobei zum einen mittels eines absoluten Sensors (30) die Winkelzone (Z₁, Z₂, Z₃, Z₄), innerhalb der sich das jeweilige Wischblatt (14, 16) befindet, und zum anderen mittels eines relativen Sensors (32, 34) der Winkel (δ₁, δ₂), den das Wischblatt (14, 16) innerhalb der jeweiligen Winkelzone (Z₁, Z₂, Z₃, Z₄) aufweist, bestimmt wird.

2. Verfahren nach Anspruch 1, **dadurch gekennzeichnet, dass** beim Überschreiten der Wischblätter (14, 16) von einer Winkelzone (Z₁, Z₂, Z₃, Z₄) in eine benachbarte Winkelzone (Z₁, Z₂, Z₃, Z₄) der Winkel (δ₁, δ₂) innerhalb der zweiten Winkelzone (Z₁, Z₂, Z₃, Z₄) rückgesetzt wird.

3. Verfahren nach Anspruch 1 oder 2, **dadurch gekennzeichnet, dass** beim Starten der Wischeranlage (10) und/oder des Fahrzeuges bestimmt wird, in welcher Winkelzone (Z₁, Z₂, Z₃, Z₄) sich das jeweilige Wischblatt (14, 16) befindet, und dass ausgehend von der jeweiligen Winkelzone (Z₁, Z₂, Z₃, Z₄) im Steuergerät (26) Steuerabläufe abgelegt sind, die die Motoreinheiten (22, 24) derart ansteuern, dass die Wischblätter (14, 16) ohne eine gegenseitige Kollision in eine jeweils benachbarte Winkelzone (Z₁, Z₂, Z₃, Z₄) bewegt werden.

4. Verfahren nach Anspruch 3, **dadurch gekennzeichnet, dass** die Steuerabläufe die Wischblätter (14, 16) derart bewegen, dass sie in eine Parkposition (PS) geführt werden.

5. Wischeranlage (10), insbesondere Gegenlauf- oder Schmetterlingswischanlage, mit wenigstens zwei unabhängig voneinander antreibbaren, mit Wischarmen (18) zur Aufnahme von Wischblättern (14, 16) gekoppelten Motoreinheiten (22, 24), mit einem Steuergerät (26) zur Ansteuerung der Motoreinheiten (22, 24), und mit dem Steuergerät (26) verbundenen Sensoreinheiten (28, 32 und 30, 34) zur Bestimmung der Winkelposition (ϕ₁, ϕ₂) der Wischblätter (14, 16), **dadurch gekennzeichnet, dass** die Wischeranlage (10) zur Durchführung des Verfahrens nach einem der Ansprüche 1 bis 4 geeignet ist.

6. Wischeranlage (10) nach Anspruch 5, **dadurch gekennzeichnet, dass** für jeden Wischarm (18) eine Sensoreinheit (28, 32 und 30, 34) vorgesehen ist, die einen absoluten Sensor (28, 30) zur Bestimmung der jeweiligen Winkelzone (Z₁, Z₂, Z₃, Z₄) und einen relativen Sensor (32, 34) zur Bestimmung des Winkels (δ₁, δ₂) innerhalb einer Winkelzone aufweist, wobei die Grenzen zwischen jeweils zwei benachbarten Winkelzonen Referenzpunkte für den relativen Sensor (32, 34) bilden.

7. Wischeranlage (10) nach Anspruch 6, **dadurch gekennzeichnet, dass** die absoluten Sensoren (28, 30) die Winkelzonen (Z₁, Z₂, Z₃, Z₄) an den Schwenkachsen (20) der jeweiligen Wischarme (18) erfassen.

8. Wischeranlage (10) nach Anspruch 6 oder 7, **dadurch gekennzeichnet, dass** der absolute Sensor (28, 30) ein digitaler Magnetfeldsensor ist, der ein an der Schwenkachse (20) angeordnetes Polrad (36) umfasst, das von wenigstens zwei versetzt zueinander angeordneten Sensorelementen (H₁, H₂) abgetastet wird.

9. Wischeranlage (10) nach Anspruch 8, **dadurch gekennzeichnet, dass** die Anordnung, Anzahl und die Größe (θ_{N}, θ_{S}) der Winkelabschnitte (38, 40) der Polungen des Polrades (36) und die Anzahl und der Winkelabstand (θ_{H}) der Magnetfeldsensoren (H₁, H₂) auf den Wischwinkel (α₁, α₂) des jeweiligen Wischblatts (14, 16) abgestimmt sind.

10. Wischeranlage (10) nach einem der Ansprüche 6 bis 9, **dadurch gekennzeichnet, dass** der relative Sensor (32, 34) die Drehzahl der Motorwelle vor einer Getriebeübersetzung (G₁, G₂) erfasst.

11. Wischeranlage (10) nach einem der Ansprüche 6 bis 10, **dadurch gekennzeichnet, dass** der relative Sensor (32, 34) ein inkrementaler, digitaler Magnetfeldsensor ist.

12. Wischeranlage (10) nach einem der Ansprüche 6 bis 11, **dadurch gekennzeichnet, dass** die Wischwinkel (α₁, α₂) der Wischblätter in jeweils mindestens drei und vorzugsweise vier Winkelzonen (Z₁, Z₂, Z₃, Z₄) liegen.

13. Wischeranlage (10) nach einem der Ansprüche 6 bis 12, **dadurch gekennzeichnet, dass** der jeweilige Winkelbereich (α₁, α₂), in dem eine Kollision möglich ist, in vorzugsweise drei Winkelzonen (Z₁, Z₂, Z₃) unterteilt ist.

14. Wischeranlage (10) nach einem der Ansprüche 6 bis 13, **dadurch gekennzeichnet, dass** im Steuergerät (26) die Winkelzonen (Z₁, Z₂, Z₃, Z₄) der verschiedenen Wischblätter(14, 16) in einer Matrix abgebildet sind, wobei jeweils eine Winkelzone eines Wischblatts und eine Winkelzone eines anderen Wischblatts ein Feld (x, y, mit x = 1..4,und y= 1..4) der Matrix bilden.

15. Wischeranlage (10) nach Anspruch 14, **dadurch gekennzeichnet, dass** der Matrix der Kollisionsbereich (46) der Wischblätter (14, 16) überlagert ist.

16. Wischeranlage (10) nach Anspruch 14 oder 15, **dadurch gekennzeichnet, dass** die Felder (x,y), die von Grenzlinien (48, 50) des Kollisionsbereichs (46) durchlaufen werden, lediglich einmal von einer Grenzlinie (48, 50) durchlaufen werden.

17. Wischeranlage (10) nach Anspruch 14, 15 oder 16, **dadurch gekennzeichnet, dass** der Kollisionsbereich (46) von insgesamt neun Feldern (x,y) mit x = 1, 2, 3 und y = 1, 2, 3) abgedeckt ist.

18. Wischeranlage (10) nach einem der Ansprüche 14 bis 16, **dadurch gekennzeichnet, dass** Steuerabläufe abgelegt sind, die ausgehend von einem beliebigen Punkt (P₁, P₂, P₃, P'₃) innerhalb eines Feldes (x,y) die Wischblätter (14, 16) in ein benachbartes Feld (x,y) bewegen, ohne den Kollisionsbereich (46) zu durchlaufen.

## Claims

1. Method of operating a wiper system (10), in particular a counter-rotation or butterfly wiper system, comprising at least two motor units (22, 24) which can be driven independently of one another and are coupled to wiper arms (18) for holding wiper blades (14, 16), a controller (26) for controlling the motor units (22, 24), and sensor units (28, 32 and 30, 34) for determining the angular position (ϕ₁, ϕ₂) of the wiper blades (14, 16), said sensor units being connected to the controller (26), **characterized in that** the wiping angles (α₁, α₂) of the wiper blades (14, 16) lie within various angle zones (Z₁, Z₂, Z₃, Z₄), wherein on the one hand the angle zone (Z₁, Z₂, Z₃, Z₄) within which the respective wiper blade (14, 16) is located is determined by means of an absolute sensor (30) and on the other hand the angle (δ₁, δ₂) of the wiper blade (14, 16) within the respective angle zone (Z₁, Z₂, Z₃, Z₄) is determined by means of a relative sensor (32, 34).

2. Method according to Claim 1, **characterized in that**, when the wiper blades (14, 16) cross from one angle zone (Z₁, Z₂, Z₃, Z₄) to a neighbouring angle zone (Z₁, Z₂, Z₃, Z₄), the angle (δ₁, δ₂) within the second angle zone (Z₁, Z₂, Z₃, Z₄) is reset.

3. Method according to Claim 1 or 2, **characterized in that**, when the wiper system (10) and/or the vehicle is started, it is determined in which angle zone (Z₁, Z₂, Z₃, Z₄) the respective wiper blade (14, 16) is located, and **in that**, starting from the respective angle zone (Z₁, Z₂, Z₃, Z₄) control sequences are stored in the controller (26) which control the motor units (22, 24) in such a way that the wiper blades (14, 16) are moved into a respective neighbouring angle zone (Z₁, Z₂, Z₃, Z₄) without any collision between them.

4. Method according to Claim 3, **characterized in that** the control sequences move the wiper blades (14, 16) in such a way that they are guided into a parked position (PS).

5. Wiper system (10), in particular a counter-rotation or butterfly wiper system, comprising at least two motor units (22, 24) which can be driven independently of one another and are coupled to wiper arms (18) for holding wiper blades (14, 16), a controller (26) for controlling the motor units (22, 24), and sensor units (28, 32 and 30, 34) for determining the angular position (ϕ₁, ϕ₂) of the wiper blades (14, 16), said sensor units being connected to the controller (26), **characterized in that** the wiper system (10) is suitable for carrying out the method according to any of Claims 1 to 4.

6. Wiper system (10) according to Claim 5, **characterized in that** each wiper arm (18) is provided with a sensor unit (28, 32 and 30, 34) which has an absolute sensor (28, 30) for determining the respective angle zone (Z₁, Z₂, Z₃, Z₄) and a relative sensor (32, 34) for determining the angle (δ₁, δ₂) within an angle zone, wherein the boundaries between in each case two neighbouring angle zones form reference points for the relative sensor (32, 34).

7. Wiper system (10) according to Claim 6, **characterized in that** the absolute sensors (28, 30) detect the angle zones (Z₁, Z₂, Z₃, Z₄) at the pivot axles (20) of the respective wiper arms (18).

8. Wiper system (10) according to Claim 6 or 7, **characterized in that** the absolute sensor (28, 30) is a digital magnetic field sensor which comprises a magnet wheel (36) arranged on the pivot axle (20), which magnet wheel is scanned by at least two sensor elements (H₁, H₂) arranged offset with respect to one another.

9. Wiper system (10) according to Claim 8, **characterized in that** the arrangement, number and size (θ_{N}, θ_{S}) of the angle sections (38, 40) of the polarities of the magnet wheel (36) and the number and angular spacing (θ_{H}) of the magnetic field sensors (H₁, H₂) is adapted to the wiping angle (α₁, α₂) of the respective wiper blade (14, 16).

10. Wiper system (10) according to any of Claims 6 to 9, **characterized in that** the relative sensor (32, 34) detects the rotational speed of the motor shaft upstream of a gear transmission (G₁, G₂) .

11. Wiper system (10) according to any of Claims 6 to 10, **characterized in that** the relative sensor (32, 34) is an incremental, digital magnetic field sensor.

12. Wiper system (10) according to any of Claims 6 to 11, **characterized in that** the wiping angles (α₁, α₂) of the wiper blades lie in each case in at least three and preferably four angle zones (Z₁, Z₂, Z₃, Z₄).

13. Wiper system (10) according to any of Claims 6 to 12, **characterized in that** the respective angle range (α₁, α₂) in which a collision is possible is divided into preferably three angle zones (Z₁, Z₂, Z₃).

14. Wiper system (10) according to any of Claims 6 to 13, **characterized in that** in the controller (26) the angle zones (Z₁, Z₂, Z₃, Z₄) of the various wiper blades (14, 16) are depicted in a matrix, wherein in each case one angle zone of one wiper blade and one angle zone of another wiper blade form one field (x,y, with x = 1...4 and y = 1...4) of the matrix.

15. Wiper system (10) according to Claim 14, **characterized in that** the collision area (46) of the wiper blades (14, 16) is superposed on the matrix.

16. Wiper system (10) according to Claim 14 or 15, **characterized in that** the fields (x,y) which are passed through by boundary lines (48, 50) of the collision area (46) are passed through by a boundary line (48, 50) only once.

17. Wiper system (10) according to Claim 14, 15 or 16, **characterized in that** the collision area (46) ist covered by a total of nine fields (x,y, with x = 1, 2, 3 and y = 1, 2, 3).

18. Wiper system (10) according to any of Claims 14 to 16, **characterized in that** control sequences are stored which, starting from any point (P₁, P₂, P₃, P'₃) within a field (x,y), move the wiper blades (14, 16) into a neighbouring field (x,y) without passing through the collision area (46).

## Revendications

1. Procédé de fonctionnement d'un système d'essuie-glace (10), en particulier un système d'essuie-glace antagoniste ou papillon, comportant au moins deux unités de motorisation (22, 24) pouvant être entraînées indépendamment l'une de l'autre, couplées à des bras d'essuie-glace (18) destinés à porter des balais d'essuie-glace (14, 16), comportant un appareil de commande (26) pour la commande des unités de motorisation (22, 24), et comportant des unités de détection (28, 32 et 30, 34) connectées à l'appareil de commande (26) pour la détermination de la position angulaire (ϕ₁, ϕ₂) des bras d'essuie-glace (14, 16), **caractérisé en ce que** les angles de balayage (α₁, α₂) des balais d'essuie-glace (14, 16) se trouvent dans différentes zones angulaires (Z₁, Z₂, Z₃, Z₄), moyennant en quoi d'une part la zone angulaire (Z₁, Z₂, Z₃, Z₄) dans laquelle se trouve chaque balai d'essuie-glace (14, 16) est déterminée au moyen d'un capteur absolu (30), et d'autré part l'angle (δ₁, δ₂) que présente le balai d'essuie-glace (14, 16) à l'intérieur de chaque zone angulaire (Z₁, Z₂, Z₃, Z₄) est déterminé au moyen d'un capteur relatif (32, 34).

2. Procédé selon la revendication 1, **caractérisé en ce que**, si les balais d'essuie-glace (14, 16) franchissent une zone angulaire (Z₁, Z₂, Z₃, Z₄) pour passer dans une zone angulaire voisine (Z₁, Z₂, Z₃, Z₄), l'angle (δ₁, δ₂) à l'intérieur de la deuxième zone angulaire est remis à zéro.

3. Procédé selon la revendication 1 ou 2, **caractérisé en ce qu'**on détermine au démarrage du système d'essuie-glace et/ou du véhicule dans quelle zone angulaire se trouve chaque balai d'essuie-glace (14, 16), et **en ce que**, en partant des zones angulaires (2₁, Z₂, Z₃, Z₄) respectives, on enregistre dans l'appareil de commande (26) des séquences de commande qui commandent les unités de motorisation (22, 24) de telle manière que les balais d'essuie-glace (14, 16) se déplacent sans collision mutuelle chacun dans une zone angulaire (Z₁, Z₂, Z₃, Z₄) voisine.

4. Procédé selon la revendication 3, **caractérisé en ce que** la séquence de commande déplace les balais d'essuie-glace (14, 16) de telle manière qu'ils sont amenés dans une position de stationnement (PS).

5. Système d'essuie-glace (10), en particulier système d'essuie-glace antagoniste ou papillon, comportant au moins deux unités de motorisation (22, 24) pouvant être entraînées indépendamment l'une de l'autre couplées à des bras d'essuie-glace (18) destinés à porter des balais d'essuie-glace (14, 16), comportant un appareil de commande (26) pour la commande des unités de motorisation (22, 24), et comportant des unités de détection (28, 32 et 30, 34) connectées à l'appareil de commande (26) pour la détermination de la position angulaire (ϕ₁, ϕ₂) des bras d'essuie-glace (14, 16), **caractérisé en ce que** le système d'essuie-glace (10) convient à la mise en oeuvre du procédé selon une des revendications 1 à 4.

6. Système d'essuie-glace (10) selon la revendication 5, **caractérisé en ce que**, pour chaque bras d'essuie-glace (18), est prévue une unité de détection (28, 32 et 30, 34) qui présente un capteur absolu (28, 30) pour la détermination de chaque zone angulaire (Z₁, Z₂, Z₃, Z₄) et un capteur relatif (32, 34) pour la détermination de l'angle (δ₁, δ₂) à l'intérieur d'une zone angulaire, les limites entre deux zones angulaires respectivement voisines formant le point de référence pour le capteur relatif (32, 34).

7. Système d'essuie-glace (10) selon la revendication 6, **caractérisé en ce que** les capteurs absolus (28, 30) détectent les zones angulaires (Z₁, Z₂, Z₃, Z₄) au niveau des axes de pivotement (20) respectifs des bras d'essuie-glace (18).

8. Système d'essuie-glace selon la revendication 6 ou 7, **caractérisé en ce que** le capteur absolu (28, 30) est un capteur de champ magnétique numérique qui comprend une roue polaire (36) disposée sur l'axe de pivotement et qui est balayée par au moins deux éléments de détection (H₁, H₂) disposés en décalage l'un par rapport à l'autre.

9. Système d'essuie-glace (10) selon la revendication 8, **caractérisé en ce que** l'agencement, le nombre et la grandeur (θ_{N}, θ_{S}) des segments angulaires (38, 40) des polarités de la roue polaire (36) et le nombre et l'écart angulaire (θ_{H}) des capteurs de champ magnétique (H₁, H₂) sont adaptés à l'angle de balayage (α₁, α₂) de chaque balai d'essuie-glace (14, 16).

10. Système d'essuie-glace (10) selon une des revendications 6 à 9, **caractérisé en ce que** le capteur relatif (32, 34) détecte la vitesse de rotation de l'arbre moteur en amont d'une démultiplication de la transmission (G₁, G₂).

11. Système d'essuie-glace (10) selon une des revendications 6 à 10, **caractérisé en ce que** le capteur relatif (32, 34) est un capteur de champ magnétique numérique incrémental.

12. Système d'essuie-glace (10) selon une des revendications 6 à 11, **caractérisé en ce que** les angles de balayage (α₁, α₂) des balais d'essuie-glace se trouvent dans chaque cas dans au moins deux et de préférence quatre zones angulaires (Z₁, Z₂, Z₃, Z₄)

13. Système d'essuie-glace selon une des revendications 6 à 12, **caractérisé en ce que** chaque plage d'angles (α₁, α₂) dans laquelle une collision est possible est de préférence divisée en trois zones angulaires (2₁, Z₂, Z₃) .

14. Système d'essuie-glace (10) selon une des revendications 6 à 13, **caractérisé en ce que**, dans l'appareil de commande (26), les zones angulaires (Z₁, Z₂, Z₃, Z₄) des différents balais d'essuie-glace (14, 16) sont représentées dans une matrice, une zone angulaire d'un balai d'essuie-glace et une zone angulaire d'un autre balai d'essuie-glace formant respectivement un champ (x,y, avec x = 1..4 et Y = 1..4) de la matrice.

15. Système d'essuie-glace selon la revendication 14, **caractérisé en ce que** la matrice est superposée à la plage de collision (46) des balais d'essuie-glace (14, 16).

16. Système d'essuie-glace (10) selon la revendication 14 ou 15, **caractérisé en ce que** les champs (x,y) qui sont traversés par les lignes de démarcation (48, 50) de la plage de collision (46) ne sont traversés qu'une seule fois par une ligne de démarcation (48, 50).

17. Système d'essuie-glace (10) selon la revendication 14, 15 ou 16, **caractérisé en ce que** la zone de collision (46) est couverte par un total de neuf champs (x,y, avec x = 1, 2, 3 et y = 1, 2, 3).

18. Système d'essuie-glace (10) selon une des revendications 14 à 16, **caractérisé en ce qu'**on enregistre des séquences de commande qui, partant de n'importe quel point P₁, P₂, P₃ P'₃) à l'intérieur d'un champ (x,y), fait passer les balais d'essuie-glace (14, 16) dans un champ voisin (x,y) sans qu'ils traversent la plage de collision (46).
